# EUROPÄISCHE PATENTANMELDUNG

(11) **EP 3 292 938 A1**
(43) Veröffentlichungstag der Anmeldung: **14.03.2018**
(21) Anmeldenummer: 17188387.9
(22) Anmeldetag: 29.08.2017
(51) Int. Cl.: B23K 10/02

(54) **PLASMASCHWEISSVERFAHREN UND PLASMASCHWEISSVORRICHTUNG**

(30) Priorität: 29.08.2016 DE 102016216170
(71) Anmelder: Biyikli, Gökhan, 57074 Siegen (DE)
(72) Erfinder: Biyikli, Gökhan, 57074 Siegen (DE)
(74) Vertreter: Kierdorf Ritschel Richly

(57) **Zusammenfassung**

Die Erfindung betrifft ein Schweißverfahren, wobei wenigstens die folgenden Verfahrensschritte durchlaufen werden:
- Bereitstellen einer Vorrichtung (4) zum Plasmaschweißen, mit wenigstens einem Schweißkopf (6), der dazu vorgesehen ist, in einer Schweißrichtung (8) entlang eines Schweißspalts (10) geführt zu werden;
- Bereitstellen wenigstens eines Distanzelements (12), das dazu vorgesehen ist, zwischen gegenüberliegenden Blechkanten (14) in dem Schweißspalt (10) angeordnet zu werden;
- Herstellen einer Schweißnaht (26), wobei
- das Distanzelement (12) zwischen den zu verschweißenden Blechkanten (14) in dem Schweißspalt (10) angeordnet ist,
- die Blechkanten (14) durch das Distanzelement (12) in einem Abstand (w) zueinander gehalten werden und
- die Blechkanten (14) mit Hilfe der Vorrichtung (4) zum Plasmaschweißen miteinander verschweißt werden.

## Beschreibung

Die vorliegende Erfindung betrifft ein Schweißverfahren und eine Schweißvorrichtung mit einer Vorrichtung zum Plasmaschweißen.

Beim Plasmaschweißen - oder auch Plasma-Metall-Inertgasschweißen bzw. Plasmastichlochschweißen - dient ein Plasmastrahl als Wärmequelle. Ein Vorteil des Plasmaschweißens liegt darin, dass sich der Plasmastrahl zu einer nahezu zylindrischen Säule fokussieren lässt. Durch den fokussierten Wärmeeintrag lässt sich der Schweißverzug z.B. im Vergleich zum WIG-Schweißverfahren reduzieren. Der selbst bei noch geringen Stromstärken von weniger als 1 Ampere stabil brennende Plasmaschweißbogen bietet zudem den Vorteil, dass das Schweißverfahren unempfindlich gegenüber Abstandsänderungen zwischen dem Schweißkopf bzw. der Schweißdüse und dem zu schweißenden Bauteil ist.

Je nach zu verschweißendem Material ist es derzeit möglich, Bleche ohne Nahtvorbereitung im Stumpfstoß bis zu einer Blechstärke von ca. 8 mm in einem einseitigen Schweißzug über die volle Blechstärke durch Plasmaschweißen miteinander zu verbinden.

Vor diesem Hintergrund ist es die Aufgabe der vorliegenden Erfindung, ein Schweißverfahren und eine Schweißvorrichtung mit einer Vorrichtung zum Plasmaschweißen anzugeben, die, je nach zu schweißendem Werkstoff, das einseitige Durchschweißen von Blechdicken größer gleich 8 mm in einem Schweißzug ermöglichen, insbesondere im Stumpfstoß und ohne Nahtvorbereitung.

Die voranstehend beschriebene Aufgabe wird durch ein Schweißverfahren nach Anspruch 1 und durch eine Schweißvorrichtung nach Anspruch 10 gelöst. Vorteilhafte Ausgestaltungen der Erfindung ergeben sich aus den abhängigen Ansprüchen und der nachstehenden Beschreibung.

Gemäß einem ersten Aspekt betrifft die Erfindung ein Schweißverfahren, wobei wenigstens die folgenden Verfahrensschritte durchlaufen werden:
- Bereitstellen einer Vorrichtung zum Plasmaschweißen, mit wenigstens einem Schweißkopf, der dazu vorgesehen ist, in einer Schweißrichtung entlang eines Schweißspalts geführt zu werden;
- Bereitstellen wenigstens eines Distanzelements, das dazu vorgesehen ist, zwischen gegenüberliegenden Blechkanten in dem Schweißspalt angeordnet zu werden;
- Herstellen einer Schweißnaht, wobei
- das Distanzelement zwischen den zu verschweißenden Blechkanten in dem Schweißspalt angeordnet ist,
- die Blechkanten durch das Distanzelement in einem Abstand zueinander gehalten werden und
- die Blechkanten mittels der Vorrichtung zum Plasmaschweißen miteinander verschweißt werden.

Dadurch, dass der Schweißspalt mithilfe des Distanzelements während des Schweißvorgangs offengehalten wird, kann ein zuverlässiges Verschweißen auch vergleichsweise großer Blechstärken bzw. Blechdicken erreicht werden.

Bei der Schweißnaht kann es sich um eine Längsschweißnaht handeln.

Die Schweißrichtung beschreibt die Richtung der Relativbewegung zwischen dem Schweißkopf und dem zu verschweißenden Blech. Die Schweißrichtung kann beispielsweise parallel zu einer Längserstreckung der zu fertigenden Schweißnaht und/oder einer Längserstreckung des Schweißspalts orientiert sein.

Bevorzugt können die Blechkanten in einem einseitigen Schweißzug voll miteinander verschweißt werden. D.h. durch ein einmaliges Überfahren mit dem Schweißkopf wird der Schweißspalt über einer zu verschweißenden Blechdicke der gegenüberliegenden Blechkanten betrachtet vollständig geschlossen.

Wenn vorliegend von "gegenüberliegenden Blechkanten" gesprochen wird, so handelt es sich dabei um einander zugewandte Seitenflächen oder Stirnseiten zweier zu verbindender Blechteile oder Blechbereiche. Die einander gegenüberliegenden Blechkanten bzw. die einander zugewandten Seiten oder Stirnflächen der zu verbindenden Blechbereiche oder der zu verbindenden Bleche begrenzen daher wenigstens zweiseitig den Schweißspalt. Eine lichte Weite des Schweißspalts ist daher durch den Abstand der einander gegenüberliegenden Blechkanten bestimmt.

Die einander gegenüberliegend angeordneten Blechkanten können zwei separaten Blechen zugeordnet sein, die miteinander verbunden werden sollen. Alternativ können die einander gegenüberliegenden Blechkanten zu einem Blech gehören, das durch Umformen zu einem Rohr mit kreisförmigem, rechteckigem oder quaderförmigem Querschnitt geformt worden ist.

Nach einer Weiterbildung des Schweißverfahrens ist vorgesehen, dass das Distanzelement ein dem Schweißkopf in Schweißrichtung betrachtet voreilender Keil oder Dorn ist. Durch den Dorn oder den Keil kann eine vordefinierbare Spaltweite des Schweißspalts eingestellt werden. Die Spaltweite kann durch einen Durchmesser des Dorns oder des Keils und/oder durch einen Abstand des Dorns oder Keils zu dem Schweißkopf einstellbar sein.

Der Dorn kann einen entlang seiner Längserstreckung betrachtet im Wesentlichen konstanten Querschnitt aufweisen. Dadurch kann gewährleistet werden, dass auch bei einer Veränderung der relativen Längsposition des Dorns zu dem Schweißspalt die einzustellende Spaltweite des Schweißspalts weiterhin gegeben ist.

Alternativ kann der Keil oder Dorn einen sich entlang seiner Längserstreckung verändernden Querschnitt haben. Beispielsweise kann der Keil oder Dorn entlang seiner Längserstreckung verjüngt oder im Durchmesser erweitert sein. So kann der Dorn einen sich entlang seiner Längserstreckung betrachtet konisch verjüngenden Querschnitt aufweisen. Auf diese Weise können mithilfe eines einzelnen Keils oder eines einzelnen Dorns verschiedene Spaltweiten eingestellt werden, indem der Dorn in verschiedenen Positionen in den Schweißspalt eingerückt wird.

Der Keil oder Dorn kann an einer Aufnahme befestigt sein, die auch den Schweißkopf trägt. So lässt sich in einfacher Weise die Bewegung des Keils bzw. des Dorns an die Bewegung des Schweißkopfs koppeln. Beispielsweise kann durch einen in einer Aufnahme vorgegebenen Abstand zwischen dem Schweißkopf und dem Dorn der Abstand zwischen einer Plasmasäule und dem Keil oder Dorn im Schweißspalt eingestellt werden.

Der Dorn oder Keil kann an einer von der Führung oder Halterung des Schweißkopfs separaten Vorrichtung befestigt sein und unabhängig von dem Schweißkopf entlang des Schweißspalts geführt bzw. bewegt werden. Auf diese Weise ist die Relativbewegung des Dorns zum Schweißspalt unabhängig von der Relativbewegung des Schweißkopfs zum Schweißspalt einstellbar.

Eine Längserstreckung des Dorns oder Keils kann im Wesentlichen orthogonal zu einer Ebene orientiert sein, die durch die Längs- und Breitenerstreckung der zu verbindenden Bleche oder Blechbereiche aufgespannt ist. So lässt sich eine einfache Ausrichtung und Führung des Dorns relativ zum Schweißspalt erreichen.

Der Dorn oder Keil kann relativ zu einem zu verschweißenden Blech in Richtung der Längserstreckung des Dorns oder Keils und/oder entlang einer Längserstreckung des Schweißspalts bewegbar sein. So kann der Keil oder Dorn durch einen oder zwei Linearantriebe bzw. Linearachsen einfach und robust orthogonal zur Längserstreckung des Schweißspalts oder entlang des Schweißspalts bewegt werden.

Nach einer Weiterbildung des Schweißverfahrens ist vorgesehen, dass das Distanzelement entlang der Schweißrichtung betrachtet einen konstanten Abstand zu dem Schweißkopf aufweist. Damit kann eine konstante Schweißnahtgüte über der gesamten Längserstreckung der zu fertigenden Schweißnaht gewährleistet werden. Mit anderen Worten haben die zu verbindenden Blechkanten während des Schweißprozesses über der gesamten Länge des Schweißspalts betrachtet, in dem Zeitpunkt, zu dem sie von dem Schweißkopf überfahren und stoffschlüssig miteinander verbunden werden, den gleichen Abstand zueinander.

Weist das Distanzelement entlang der Schweißrichtung betrachtet einen konstanten Abstand zu dem Schweißkopf auf, kann das Distanzelement in einfacher Weise mit dem Schweißkopf derart gekoppelt sein, dass der Schweißkopf in seiner Bewegung dem Distanzelement entlang der Schweißrichtung folgt. Beispielsweise können der Schweißkopf und das Distanzelement an einem gemeinsamen Werkzeugträger befestigt sein, der wiederum eine Antriebs- oder Bewegungseinheit aufweist, um seinerseits entlang des Schweißspalts bewegt zu werden.

Alternativ kann der Schweißkopf zusammen mit dem Distanzelement stationär ausgeführt sein, wobei die zu verschweißenden Blechkanten an dem Schweißkopf und dem Distanzelement vorbeigeführt werden. Dazu können beispielsweise Transportbänder, - rollen oder -ketten eingesetzt werden. Beispielsweise können zwei zu verbindende Bleche aus einem Coil abgewickelt und längsseitig miteinander verschweißt werden.

Eine weitere Ausgestaltung des Schweißverfahrens zeichnet sich dadurch aus, dass das Distanzelement in Schweißrichtung betrachtet zumindest abschnittsweise mit einer höheren oder niedrigeren Geschwindigkeit geführt wird als der Schweißkopf. Auf diese Weise kann die Spaltweite des Schweißspalts variabel eingestellt werden. So können auch Bleche mit entlang der Längserstreckung des Schweißspalts betrachtet variierender Blechdicke miteinander verschweißt werden, ohne dass der Schweißprozess unterbrochen werden muss. Der in Längserstreckung des Schweißspalts gemessene Abstand zwischen dem Schweißkopf und dem Distanzelement kann daher in Abhängigkeit von der zu schweißenden Blechdicke einstellbar sein und über der Längserstreckung der Schweißnaht bzw. des Schweißspalts betrachtet während eines Schweißzugs bzw. einer Überfahrt des Schweißkopfs zumindest abschnittsweise variieren.

Es können sowohl konstante Blechdicken als auch Bleche mit variierenden Blechdicken kontinuierlich in einem Schweißzug miteinander verschweißt werden.

Sofern das Distanzelement in Schweißrichtung betrachtet zumindest abschnittsweise mit einer höheren oder niedrigeren Geschwindigkeit geführt werden soll als der Schweißkopf, kann vorgesehen sein, dass für den Schweißkopf und das Distanzelement jeweils separate Vorrichtungen zum Bewegen des Schweißkopfs und des Distanzelements entlang des Schweißspalts vorgesehen sind. Eine Bewegung des Distanzelements kann unabhängig von einer Bewegung des Schweißkopfs erfolgen.

Die Relativposition zwischen dem Schweißkopf und dem Distanzelement kann auch in dem Fall verstellbar sein, in dem der Schweißkopf und das Distanzelement stationär angeordnet sind und die zu verschweißenden Bleche oder Blechbereiche an dem Schweißkopf und dem Distanzelement vorbeigeführt werden. "Stationärer Schweißkopf" und "stationäres Distanzelement" bedeuten in diesem Fall lediglich, dass der Schweißvorschub entlang der Längserstreckung des Schweißspalts oder der Schweißnaht aus einer Bewegung des Blechs resultiert. Der relative, entlang der Längserstreckung des Schweißspalts oder der Schweißnaht gemessene Abstand zwischen dem stationären Schweißkopf und dem stationären Distanzelement kann vor dem Schweißprozess eingestellt werden und alternativ oder ergänzend auch während des Schweißprozesses eingestellt und/oder variiert werden.

Die Relativposition des Distanzelements zum Schweißkopf kann als Stellgröße zum Einstellen der Spaltweite des Schweißspalts im Bereich des Schweißplasmas dienen. Die Relativposition des Distanzelements zum Schweißkopf kann demnach ergänzend zum Schweißstrom, zur Schweißspannung, zum Drahtvorschub oder zur Schweißgeschwindigkeit als weiterer Parameter zum Einstellen oder Regeln des Schweißprozesses dienen.

Das Distanzelement kann einen tropfenförmigen Querschnitt haben, mit einer keilförmig zulaufenden Schmalseite, wobei die Schmalseite dem Schweißkopf zugewandt ist. Damit können sich die Blechkanten seitlich an den tropfenförmigen Querschnitt anlegen, um die Einstellung der geforderten Spaltweite zu ermöglichen.

Das Distanzelement kann mit einer Haltevorrichtung an dem Schweißkopf oder einer den Schweißkopf tragenden Struktur befestigt sein. So kann auf eine zusätzliche Vorrichtung zum Halten und Führen des Distanzelements verzichtet werden. Die Haltvorrichtung kann starr mit fixem Abstand oder verstellbar sein, um einen Abstand zwischen dem Distanzelement und dem Schweißkopf einzustellen.

Es kann vorgesehen sein, dass das Distanzelement an einer vom Schweißkopf separaten Halterung oder Führung befestigt ist.

Es kann vorgesehen sein, dass ergänzend zu einer Schutzgaszufuhr des Schweißkopfs an dem Distanzelement eine zusätzliche Schutzgaszufuhr vorgesehen ist, wobei während des Herstellens der Schweißnaht Schutzgas, insbesondere als Formiergas, über die zusätzliche Schutzgaszufuhr in den Schweißspalt oder einen an den Schweißspalt angrenzenden Bereich, wie z.B. einen Raum unterhalb des Schweißspalts, eingebracht wird. So kann trotz des Abstands der Blechkanten in zuverlässiger Weise eine Schutzgasatmospähre für den Schweißprozess bereitgestellt werden. Insbesondere dient die zusätzliche Schutzgaszufuhr über das Distanzelement dem Einbringen von Formiergas, um die Wurzel der Schweißnaht vor Atmosphäreneinflüssen zu schützen.

Zumindest ein Teil der zusätzlichen Schutzgaszufuhr kann kompakt in das Distanzelement integriert sein, wobei das Distanzelement eine in den Schweißspalt mündende Durchgangsöffnung aufweist, die Teil der zusätzlichen Schutzgaszufuhr ist.

Es kann vorgesehen sein, dass auf einer dem Schweißkopf abgewandten Seite des Schweißspalts eine Düse oder mehrere Düsen vorgesehen sind, die Schutzgas als Formiergas in Richtung der Blechkanten ausbringen, um eine Wurzel der Schweißnaht vor Atmosphäreneinflüssen zu schützen.

Bei dem Schweißverfahren kann es sich insbesondere um Plasmastichlochschweißen handeln. Die Schmelze wird vorliegend insbesondere nicht mechanisch abgestützt, so dass keine Schiene oder dergleichen zum Abstützen der Schmelze während des Schweißvorgangs vorhanden ist.

Nach einer weiteren Ausgestaltung des Schweißverfahrens ist vorgesehen, dass das Distanzelement ein in dem Schweißspalt zwischen den gegenüberliegenden Blechkanten angeordneter Zusatzwerkstoff ist. Einerseits dient das Distanzelement dazu, eine Spaltweite für den Schweißprozess vorzugeben. Andererseits wird durch den Zusatzwerkstoff der Schweißspalt gefüllt. So kann in kostengünstiger Weise das Offenhalten des Schweißspalts und zudem das Einbringen eines Zusatzwerkstoffs realisiert werden.

Bei dem Zusatzwerkstoff kann es sich um einen im Vergleich zu dem zu verschweißenden Blech höher legierten Werkstoff handeln. "Höher legiert" bedeutet vorliegend, dass der Massenanteil an Legierungselementen in dem Zusatzwerkstoff höher ist als in einem Werkstoff des zu verschweißenden Blechs. Es können eines oder mehrere Legierungselemente in dem Zusatzwerkstoff oder dem Werkstoff des zu verschweißenden Blechs vorgesehen sein. Der Zusatzwerkstoff kann einen geringeren Schmelzpunkt aufweisen als ein Werkstoff des zu verschweißenden Blechs. Der Zusatzwerkstoff kann dazu dienen, das Gefüge der Schweißnaht einzustellen und den Schweißspalt zu füllen.

Ein zu verschweißendes Blech oder zu verschweißende Blechbereiche können aus einem Stahl- oder einem Edelstahlwerkstoff bestehen.

Eine weitere Ausgestaltung der Erfindung zeichnet sich dadurch aus, dass der Zusatzwerkstoff ein Band oder ein Draht ist, wobei der Zusatzwerkstoff insbesondere stoffschlüssig an wenigstens einer Blechkante gehalten ist. Der Zusatzwerkstoff kann daher kostengünstig als Draht- oder bandspule bzw. -rolle bereitgestellt werden.

Der Zusatzwerkstoff kann stoffschlüssig an einer Blechkante gehalten sein, beispielsweise durch Kleben, Löten oder Schweißen. Während des Plasmaschweißens sind daher keine zusätzlichen Halte- oder Zuführeinrichtungen erforderlich, um den Zusatzwerkstoff, der als Distanzelement dient, in den Schweißspalt einzubringen. Der Zusatzwerkstoff kann eine Längserstreckung aufweisen, die parallel zu einer Längserstreckung des Schweißspalts und/oder der Schweißnaht verläuft.

Gemäß einer Weiterbildung des Schweißverfahrens ist vorgesehen, dass eine Spaltweite des Schweißspalts zwischen einschließlich 0,4 mm bis einschließlich 15 mm beträgt. Die Spaltweite kann abhängig von dem zu verschweißenden Werkstoff und/oder der zu schweißenden Blechdicke einstellbar sein. So können mit dem Verfahren verschiedene Werkstoffe und Blechdicken bearbeitet werden.

Alternativ oder ergänzend ist eine zu verschweißende Blechdicke größer oder gleich 2 mm, insbesondere größer oder gleich 8 mm, insbesondere größer gleich 10 mm.

Insbesondere können die einander zugewandten Planseiten zweier zu verschweißender Bauteile mit dem vorgeschlagenen Verfahren einseitig durchgeschweißt werden. Diese einander zugewandten Planseiten können sich über die volle Wandstärke der Schweißnaht erstrecken oder aber lediglich einen Teilbereich der Naht, wie einen unteren Steg oder dergleichen, bilden.

Der Steg einer Y-Naht kann mit dem erfindungsgemäßen Verfahren verschweißt werden. Der Steg der Y-Naht kann beispielsweise 1 mm oder 2 mm dick sein. Die Nahtdicke der Y-Naht kann insgesamt 8 mm oder mehr für Schwarzmaterial oder 10 mm oder mehr für Edelstahl betragen.

Nach einer Weiterbildung des Schweißverfahrens ist vorgesehen, dass die gegenüberliegenden Blechkanten im Stumpfstoß verschweißt werden, insbesondere mit einer I-Naht und ohne Nahtvorbereitung. Auf diese Weise kann effizient eine Schweißnaht erzeugt werden, ohne eine aufwändige Nahtvorbereitung vorzusehen.

Beispielsweise können Edelstahlwerkstoffe mit einer Blechdicke größer gleich 10 mm ohne Nahtvorbereitung im Stumpfstoß in einem einseitigen Schweißzug miteinander verschweißt werden.

Weiter können Stahlwerkstoffe, insbesondere "Schwarzmaterial" oder Stähle der Reihe S235 - S355, wie S235JR oder dergleichen, mit einer Blechdicke größer gleich 8 mm ohne Nahtvorbereitung im Stumpfstoß in einem einseitigen Schweißzug miteinander verschweißt werden.

Um die Verfahrenseffizienz weiter zu steigern, kann nach einer Weiterbildung des Verfahrens wenigstens ein weiterer Schweißkopf vorgesehen sein. Bei dem Schweißkopf kann es sich um einen Schweißkopf zum Unter-Pulver-Schweißen (UP), Wolfram-Inertgas-Schweißen (WIG) oder Metallschutzgasschweißen (MSG, MAG, MIG) handeln. Auf diese Weise kann zusammen mit der Vorrichtung zum Plasmaschweißen ein Hybridschweißverfahren realisiert werden. Beispielsweise kann ein erster Teil der Schweißnaht, insbesondere ein Nahtgrund, im Plasma-Schweißverfahren geschweißt werden. Ein zweiter Teil der Schweißnaht kann durch Unterpulver-Schweißen gefüllt werden.

Es können zwei oder mehr Schweißköpfe eingesetzt werden, die dem Plasmakopf nacheilend die Schweißnaht verschließen. Durch die verbesserte Nahtgüte und die verbesserte Materialzusammensetzung, die sich aus dem Plasmaschweißen ergibt, besteht eine größere Variabilität bei der Anordnung der nacheilenden Schweißköpfe. So können beispielsweise ein oder mehrere Unterpulverschweißköpfe, ein oder mehrere MSG, MAG, WIG oder andere Schweißköpfe in einem Abstand von beispielsweise 400 mm dem Plasmaschweißkopf nachgeführt werden.

Alternativ oder ergänzend kann ein Schweißzusatzwerkstoff zum Füllen des Schweißspalts vorgesehen sein. Durch das Offenhalten der Schweißnaht mittels des Distanzelements kann mehr Zusatzwerkstoff in das Material der Schweißnaht eingebracht werden, um den Mischungsgrad zu erhöhen - d.h. der Anteil an Zusatzwerkstoff (in Massenprozent) in der Schweißnaht wird gegenüber dem Anteil des Grundwerkstoffs (in Massenprozent) des Blechs in der Schweißnaht erhöht. So kann, je nach Anteil und Art des verwendeten Zusatzwerkstoffs, ein feines Gefüge im Bereich der Schweißnaht eingestellt werden, welches insbesondere eine höhere Festigkeit aufweist, als der Grundwerkstoff des zu verschweißenden Blechs. Durch das Einbringen eines Zusatzwerkstoffs in Verbindung mit dem Distanzelement kann die Kerbschlagzähigkeit der Schweißnaht erhöht werden. Wie zuvor bereits dargelegt, kann der Zusatzwerkstoff gleichzeitig das Distanzelement bilden.

Alternativ oder ergänzend ist das Schweißverfahren zumindest teilweise automatisiert, insbesondere voll automatisiert. So kann ein effizientes Verbinden zweier Bleche bei hoher Schweißnahtgüte erreicht werden.

Die Schweißnaht kann zur Steigerung der verschweißbaren Nahtdicke oder der Betriebsfestigkeit bzw. der mechanischen Güte der Schweißnaht eine Nahtvorbereitung aufweisen. Beispielsweise kann die Schweißnaht einen schmalen Nahtgrund aufweisen. Die Schweißnaht kann als V-, HV-, X-, Y-, HY-, U-, HU-Naht oder U-Naht mit Steg, oder einer Kombination daraus, ausgeführt werden.

Nach einem weiteren Aspekt betrifft die Erfindung eine Schweißvorrichtung, mit wenigstens einer Vorrichtung zum Plasmaschweißen, mit wenigstens einem Schweißkopf, der dazu vorgesehen ist, in einer Schweißrichtung entlang eines Schweißspalts geführt zu werden; und wenigstens einem Distanzelement, das dazu vorgesehen ist, zwischen gegenüberliegenden Blechkanten in dem Schweißspalt angeordnet zu werden. Mit der Schweißvorrichtung kann das voranstehend beschriebene Verfahren ausgeführt werden. Die Schweißvorrichtung kann strukturelle Weiterbildungen aufweisen, die voranstehend mit Bezug zu dem Schweißverfahren bereits beschrieben worden sind.

Bei den strukturellen Weiterbildungen kann es sich beispielsweise um Antriebe, Halterungen oder Aufnahmen zum Halten, Bewegen und/oder Führen eines oder mehrerer Schweißköpfe und/oder des Distanzelements handeln.

Wie zuvor bereits diskutiert, können der Schweißkopf und das Distanzelement separat und unabhängig voneinander relativ zum Schweißspalt bewegbar sein.

Die Bewegung des Schweißkopfs und des Distanzelements kann gekoppelt sein, sodass ein konstanter Abstand zwischen dem Schweißkopf und dem Distanzelement gebildet ist.

Es können weitere Schweißköpfe ergänzend zu dem Plasmaschweißkopf vorgesehen sein. Alternativ oder ergänzend können zusätzliche Schweißstromquellen zusammen mit einer Plasmaschweißstromquelle in einen Schweißkopf integriert werden.

Nachfolgend wird die Erfindung anhand einer Ausführungsbeispiele darstellenden Zeichnung näher beschrieben. Es zeigen jeweils schematisch:
- Fig. 1: eine erfindungsgemäße Schweißvorrichtung in einer perspektivischen Ansicht von oben;
- Fig. 2: die Schweißvorrichtung aus Fig. 1 in einer Draufsicht;
- Fig. 3: ein Distanzelement in einer Schnittdarstellung und in perspektivischer Ansicht;
- Fig. 4: eine weitere erfindungsgemäße Schweißvorrichtung;
- Fig. 5: eine weitere erfindungsgemäße Schweißvorrichtung;
- Fig. 6: eine weitere erfindungsgemäße Schweißvorrichtung.

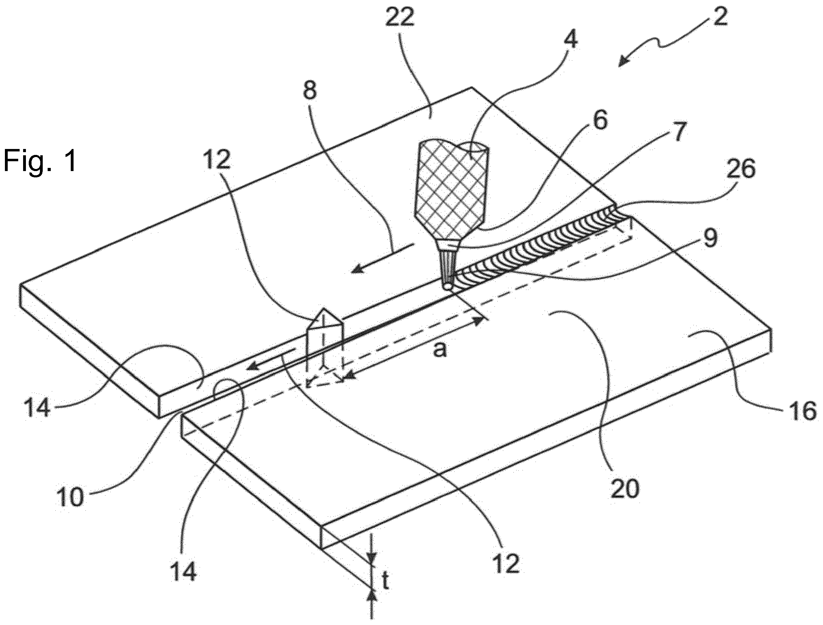

Fig. 1 zeigt eine Schweißvorrichtung 2 zur Durchführung des erfindungsgemäßen Schweißverfahrens. Die Schweißvorrichtung 2 hat eine Vorrichtung 4 zum Plasmaschweißen. Die Vorrichtung 4 zum Plasmaschweißen hat einen Schweißkopf 6, der dazu vorgesehen ist, in einer Schweißrichtung 8 entlang eines Schweißspalts 10 geführt zu werden. Eine Schweißdüse 7 des Schweißkopfs 6 fokussiert eine Plasmasäule 9 in Richtung zu verschweißender Blechkanten 14.

Im Schweißspalt 10 ist ein Distanzelement 12 angeordnet. Das Distanzelement 12 ist dem Schweißkopf 6 in Schweißrichtung 8 betrachtet voreilend. Das Distanzelement 12 erstreckt sich in seiner Höhenrichtung über die vollständige Wanddicke.

Das Distanzelement 12 ist dazu vorgesehen, zwischen den gegenüberliegenden Blechkanten 14 in dem Schweißspalt 10 angeordnet zu werden und eine Spaltweite w vorzugeben.

Das Distanzelement 12 ist ein dem Schweißkopf 6 in Schweißrichtung 8 betrachtet voreilender Keil 12. Der Keil 12 hat einen dreieckigen Querschnitt. Vorliegend hat der Keil 12 entlang seiner Längserstreckung betrachtet einen konstanten Querschnitt.

Gemäß weiteren Ausgestaltungen der Erfindung kann vorgesehen sein, dass es sich bei dem Distanzelement 12 um einen Dorn handelt, der einen im Wesentlichen kreisrunden oder ovalen Querschnitt hat.

Um verschiedene Spaltweiten w einstellen zu können, kann vorgesehen sein, dass der Keil 12 über seiner Längserstreckung betrachtet einen sich ändernden Querschnitt hat. Die Längserstreckung des Keils 12 ist vorliegend im Wesentlichen orthogonal zu einer von einer Längs- und Breitenerstreckung der zu verbindenden Bleche 20, 22 aufgespannten Ebene 16 orientiert. Die Bewegungsrichtung 18 des Distanzelements 12 ist vorliegend parallel zur Schweißrichtung 8.

Mithilfe des Plasmastrahls 9 werden die Bleche 20 und 22 entlang der Blechkanten 14 miteinander verschweißt.

Das Distanzelement 12 weist entlang der Schweißrichtung 8 betrachtet einen konstanten Abstand a zu dem Schweißkopf 6 auf. D.h., dass das Distanzelement 12 vorliegend mit der gleichen Geschwindigkeit in der Bewegungsrichtung 18 bewegt wird, mit der auch der Schweißkopf 6 entlang der Richtung 8 bewegt wird.

Gemäß alternativen Ausgestaltungen kann vorgesehen sein, dass sich das Distanzelement 12 zumindest abschnittsweise mit einer höheren oder niedrigeren Geschwindigkeit entlang des Schweißspalts 10 bewegt als der Schweißkopf 6. Auf diese Weise kann die Anordnung an sich ändernde Blechdicken entlang des Schweißspalts 10 oder sich ändernde Materialbeschaffenheiten angepasst werden.

Die Bleche 20, 22 werden vorliegend im Stumpfstoß bzw. mittels einer I-Naht ohne Nahtvorbereitung einseitig in einem einfachen Schweißzug über der vollen Blechdicke t miteinander verschweißt. Die Blechdicke t beträgt vorliegend 12 mm. Bei den Blechen 20, 22 handelt es sich um Edelstahlbleche.

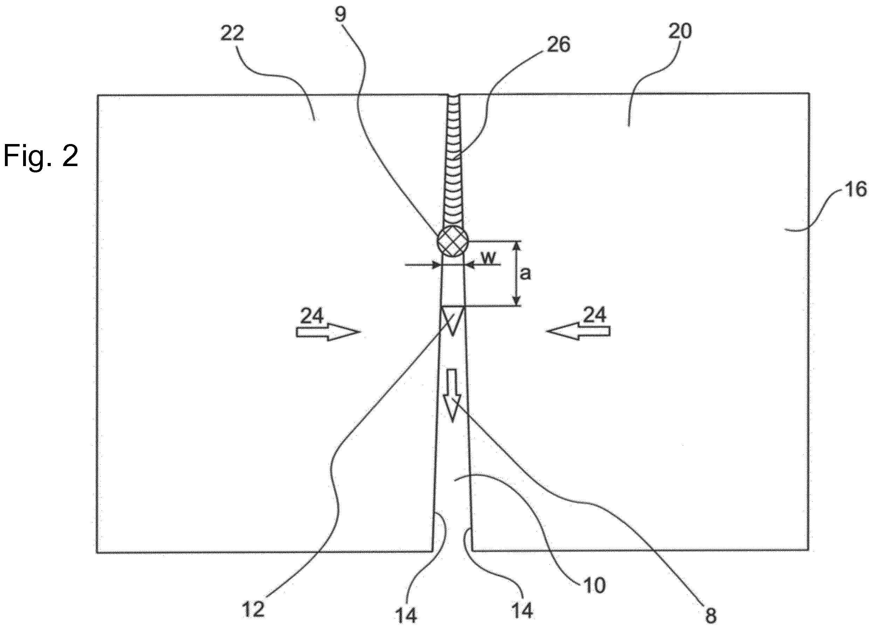

Wie aus Fig. 2 zu entnehmen ist, werden die Bleche 20,22 gegeneinandergepresst - angedeutet durch die Pfeile 24 - so dass sich ein im Wesentlichen keilförmiger Schweißspalt 10 ergibt. Das Distanzelement 12 sorgt dafür, dass der Schweißspalt 10 beim Überfahren mit dem Plasmabrenner 4 offenbleibt. Auf diese Weise kann ein zuverlässiges Durchschweißen über der gesamten Blechdicke t mit einem einfachen, einseitigen Schweißzug erreicht werden. Zudem ist es in einfacher Weise möglich, in den offen gehaltenen Schweißspalt 10 Zusatzwerkstoff zur Verbesserung des Materialgefüges, insbesondere zur Kornfeinung im Bereich einer Schweißnaht 26, einzubringen.

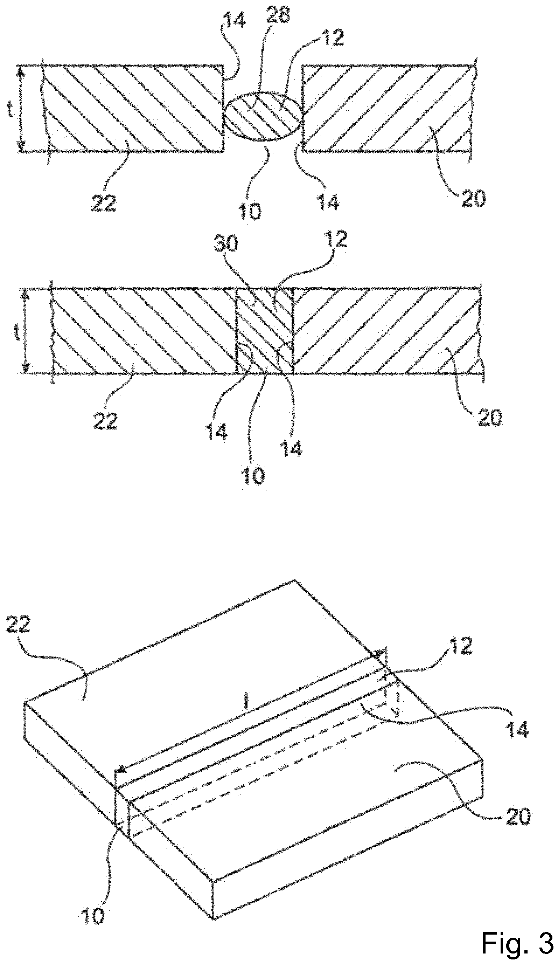

In Fig. 3 sind alternative Ausgestaltungen eines Distanzelements 12 dargestellt. Das Distanzelement 12 kann ein zwischen den gegenüberliegenden Blechkanten 14 angeordneter Zusatzwerkstoff 12 sein.

Bei dem Zusatzwerkstoff 12 kann es sich um einen Draht 12 mit einem im Wesentlichen kreisförmigen Querschnitt 28 oder ein Band 12 mit einem im Wesentlichen rechteckigen Querschnitt 30 handeln.

Das Band 12 kann sich über die volle Wandstärke der Naht erstrecken, um einen möglichen Schweißverzug zu mindern oder zentral angeordnet sein.

Der Zusatzwerkstoff 12 ist zwischen den Blechkanten 14 aufgenommen und kann zur Vereinfachung der Handhabbarkeit mit wenigstens einer der Blechkanten 14 der Bleche 20, 22 stoffschlüssig verbunden sein. Beispielsweise kann der Zusatzwerkstoff 12 mit einer Blechkante 14 verklebt, verschweißt oder verlötet sein.

Der Zusatzwerkstoff 12 ist höher legiert als der Werkstoff der Bleche 20, 22. Der Zusatzwerkstoff 12 weist einen geringeren Schmelzpunkt auf, als der Werkstoff der Bleche 20, 22. In dem vorliegenden Beispiel handelt es sich bei den Blechen 20, 22 um Edelstahlbleche, die einen Schmelzpunkt von ca. 1400 °C aufweisen. Der Zusatzwerkstoff 12 weist seinerseits einen Schmelzpunkt von ca. 700 °C auf. Auf diese Weise wird sichergestellt, dass der Zusatzwerkstoff 12 vollständig in das Schmelzbad übergeht und eine homogene Vermischung mit dem in der Schweißnaht 26 vorhandenen Werkstoff der Bleche 20, 22 stattfindet.

Wie die perspektivische Ansicht gemäß Fig. 3 zeigt, ist das Distanzelement 12 über der gesamten Länge l des Schweißspalts 10 erstreckt. Damit kann in zuverlässiger Weise ein homogenes Einbringen des Zusatzwerkstoffs 12 in das Schweißbad bzw. in die Schweißnaht 26 sichergestellt werden.

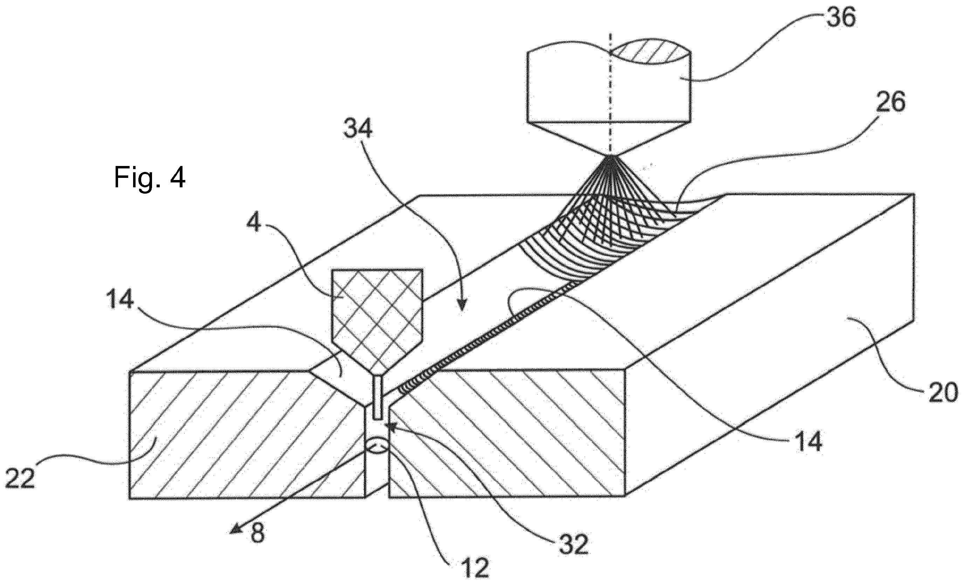

Fig. 4 zeigt eine weitere Variante des Schweißverfahrens, wobei vorliegend die Blechkanten 14 der zu verbindenden Bleche 20, 22 einer Nahtvorbereitung unterzogen worden sind.

Die Schweißnaht 26 ist hier als Y-Naht ausgeführt, die einen unteren Halsabschnitt 32 und einen daran anschließenden V-förmigen Abschnitt 34 aufweist.

Der Halsabschnitt 32 wird zunächst mithilfe einer Vorrichtung 4 zum Plasmaschweißen, dem in Schweißrichtung 8 betrachtet ein Keil 12 voreilt, verschweißt. Ein der Vorrichtung 4 zum Plasmaschweißen nachfolgender Schweißkopf 36 zum Unterpulver-schweißen füllt anschließend den Bereich 34 der Schweißnaht 26 auf.

In dem Unterpulverschweißprozess wird ein Zusatzwerkstoff in die Schweißnaht 26 eingebracht.

Alternativ zu einem voreilenden Keil kann gemäß weiteren Ausgestaltungen auch bei einer Y-Naht statt des voreilenden Keils ein Band oder ein Draht als Distanzelement in dem Halsabschnitt 32 angeordnet werden.

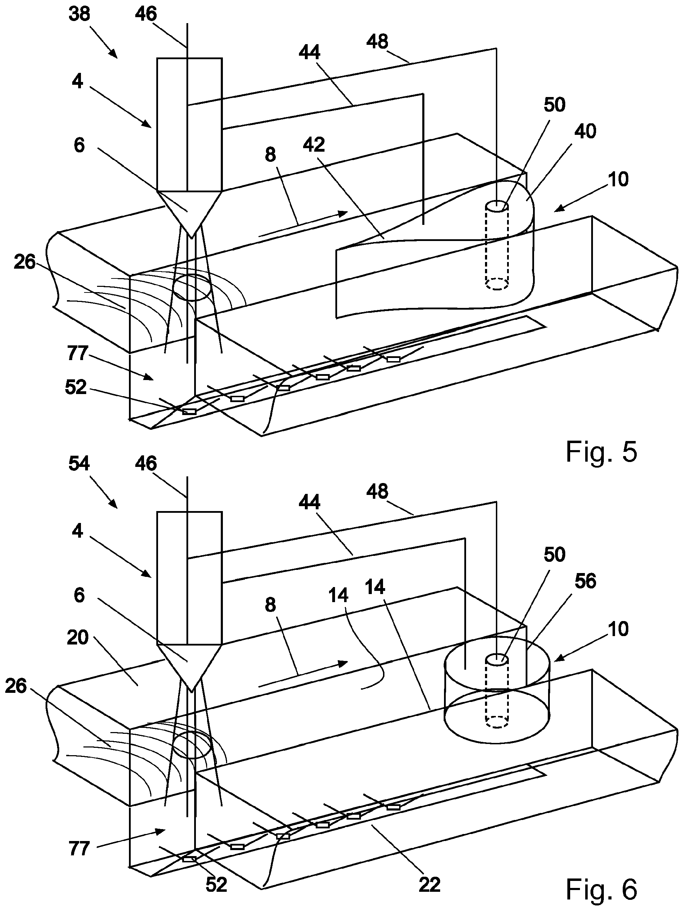

Die Figuren 5 und 6 zeigen weitere Ausführungsbeispiele erfindungsgemäße Schweißvorrichtungen, wobei nachfolgend zur Vermeidung von Wiederholungen lediglich auf die Unterschiede zu den voranstehend beschriebenen Schweißvorrichtungen eingegangen wird. Gleichen Merkmalen werden hierbei gleichen Bezugszeichen zugeordnet.

Die Schweißvorrichtung 38 gemäß Fig. 5 unterscheidet sich dadurch von den voranstehend beschriebenen Schweißvorrichtungen, dass ein Distanzelement 40 mit tropfenförmigem Querschnitt vorgesehen ist, dass eine keilförmig zulaufenden Schmalseite 42 hat, wobei die Schmalseite 42 dem Schweißkopf 6 der Vorrichtung 4 zum Plasmaschweißen zugewandt ist.

Das im Distanzelement 40 ist mit einer Haltevorrichtung 44 an dem Schweißkopf 6 der Vorrichtung 4 zum Plasmaschweißen befestigt.

Ergänzend zu einer Schutzgaszufuhr 46 des Schweißkopfs 4 ist an dem Distanzelement 40 eine zusätzliche Schutzgaszufuhr 48 vorgesehen. Hierbei wird während des Herstellens der Schweißnaht 26 Schutzgas über die zusätzliche Schutzgaszufuhr 48 in den Schweißspalt 10 eingebracht.

Das Distanzelement 40 weist eine in den Schweißspalt 10 mündende Durchgangsöffnung 50 auf, die Teil der zusätzlichen Schutzgaszufuhr 48 ist.

Um weiteres Schutzgas in den Schweißspalt 10 einzubringen, sind auf einer dem Schweißkopf 6 abgewandten Seite des Schweißspalts 10 mehrere Düsen 52 vorgesehen, die Schutzgas als Formiergas bereitstellen, um Schweißnaht bzw. Wurzel der Schweißnaht atmosphärisch zu schützen.

Das Ausführungsbeispiel gemäß Fig. 6 unterscheidet sich im Wesentlichen dadurch von der voranstehend beschriebenen Ausgestaltung, dass eine Schweißvorrichtung 54 ein Distanzelement 56 mit kreisrundem Querschnitt aufweist, um die Blechkanten 14 der Bleche 20, 22 auf Abstand zu halten.

Die Düsen 52 bringen Schutzgas bzw. Formiergas in einen unterhalb des Schweißspalts 10 gebildeten Raum 77 aus.

Bei den voranstehend beschriebenen Schweißverfahren handelt es sich um das Plasmastichlochschweißen, wie insbesondere in den Figuren 5 und 6 angedeutet. Die Schmelze wird vorliegend nicht mechanisch abgestützt, so dass keine Schiene oder dergleichen zum Abstützen der Schmelze während des Schweißvorgangs vorhanden ist.

### Bezugszeichen

- 2: Schweißvorrichtung
- 4: Vorrichtung zum Plasmaschweißen bzw. Plasmabrenner
- 6: Schweißkopf
- 7: Schweißdüse
- 8: Schweißrichtung
- 9: Plasmasäule
- 10: Schweißspalt
- 12: Distanzelement, Zusatzwerkstoff, Keil, Draht, Band
- 14: Blechkante
- 16: Ebene
- 18: Bewegungsrichtung des Distanzelements 12
- 20, 22: Blech
- 24: Anpressrichtung der Bleche 20, 22
- 26: Schweißnaht
- 28: kreisförmiger Querschnitt
- 30: rechteckiger Querschnitt
- 32: Halsbereich der Y-Naht
- 34: weiterer Bereich der Y-Naht
- 36: Unterpulver-Schweißkopf
- 38: Schweißvorrichtung
- 40: Distanzelement
- 42: Schmalseite
- 44: Haltevorrichtung
- 46: Schutzgaszufuhr
- 48: Schutzgaszufuhr
- 50: Durchgangsöffnung
- 52: Düse
- 54: Schweißvorrichtung 54
- 56: Distanzelement
- 77: Raum unterhalb der Schweißnaht 10
- w: Spaltweite
- a: Abstand
- t: Blechdicke
- l: Länge des Schweißspalts 10

## Patentansprüche

1. Schweißverfahren, wobei wenigstens die folgenden Verfahrensschritte durchlaufen werden:
- Bereitstellen einer Vorrichtung (4) zum Plasmaschweißen, mit wenigstens einem Schweißkopf (6), der dazu vorgesehen ist, in einer Schweißrichtung (8) entlang eines Schweißspalts (10) geführt zu werden;
- Bereitstellen wenigstens eines Distanzelements (12, 40, 56), das dazu vorgesehen ist, zwischen gegenüberliegenden Blechkanten (14) in dem Schweißspalt (10) angeordnet zu werden;
- Herstellen einer Schweißnaht (26), wobei
- das Distanzelement (12, 40, 56) zwischen den zu verschweißenden Blechkanten (14) in dem Schweißspalt (10) angeordnet ist,
- die Blechkanten (14) durch das Distanzelement (12, 40, 56) in einem Abstand (w) zueinander gehalten werden und
- die Blechkanten (14) mit Hilfe der Vorrichtung (4) zum Plasmaschweißen miteinander verschweißt werden.

2. Schweißverfahren nach Anspruch 1, **dadurch gekennzeichnet, dass** das Distanzelement (12, 40, 56) ein dem Schweißkopf (6) in Schweißrichtung (8) betrachtet voreilender Keil (12, 40) oder Dorn (12, 56) ist.

3. Schweißverfahren nach Anspruch 2, **dadurch gekennzeichnet, dass** das Distanzelement (12, 40, 56) entlang der Schweißrichtung betrachtet einen konstanten Abstand (a) zu dem Schweißkopf (a) aufweist.

4. Schweißverfahren nach Anspruch 2, **dadurch gekennzeichnet, dass** das Distanzelement (12, 40, 56) in Schweißrichtung (8) betrachtet zumindest abschnittsweise mit einer höheren oder niedrigeren Geschwindigkeit geführt wird als der Schweißkopf (6).

5. Schweißverfahren nach einem der Ansprüche 2 bis 4, **dadurch gekennzeichnet, dass** das Distanzelement (40) einen tropfenförmigen Querschnitt hat, mit einer keilförmig zulaufenden Schmalseite (42), wobei die Schmalseite (42) dem Schweißkopf (6) zugewandt ist.

6. Schweißverfahren nach einem der Ansprüche 2 bis 5, **dadurch gekennzeichnet, dass**
- das Distanzelement (12, 40, 56) mit einer Haltevorrichtung (44) an dem Schweißkopf (6) oder einer den Schweißkopf tragenden Struktur befestigt ist
und/oder
- das Distanzelement an einer vom Schweißkopf (6) separaten Halterung oder Führung befestigt ist.

7. Schweißverfahren nach einem der Ansprüche 2 bis 6, **dadurch gekennzeichnet, dass** ergänzend zu einer Schutzgaszufuhr (46) des Schweißkopfs (6) an dem Distanzelement (12, 40, 56) eine zusätzliche Schutzgaszufuhr (48) vorgesehen ist, wobei während des Herstellens der Schweißnaht (26) Schutzgas über die zusätzliche Schutzgaszufuhr (48) in den Schweißspalt (10) oder einen an den Schweißspalt (10) unmittelbar angrenzenden Bereich, insbesondere einen dem Schweißkopf (6) abgewandten Raum (77) unterhalb des Schweißspalts, eingebracht wird.

8. Schweißverfahren nach Anspruch 7, **dadurch gekennzeichnet, dass** das Distanzelement (40, 56) eine in den Schweißspalt (10) oder in einen an den Schweißspalt (10) unmittelbar angrenzenden Bereich mündende Durchgangsöffnung (50) aufweist, die Teil der zusätzlichen Schutzgaszufuhr (48) ist.

9. Schweißverfahren nach einem der voranstehenden Ansprüche, **dadurch gekennzeichnet,**
- **dass** auf einer dem Schweißkopf (6) abgewandten Seite des Schweißspalts (10) eine Düse (52) oder mehrere Düsen (52) vorgesehen sind, die zum Schutz der Schweißnaht (26) Formiergas in Richtung der Blechkanten (14) ausbringen
und/oder
- **dass** die Schmelze vorliegend nicht mechanisch abgestützt wird, wobei keine Schiene oder dergleichen zum Abstützen der Schmelze während des Schweißvorgangs vorhanden ist.

10. Schweißverfahren nach Anspruch 1, **dadurch gekennzeichnet, dass** das Distanzelement (12) ein in dem Schweißspalt (10) zwischen den gegenüberliegenden Blechkanten (14) angeordneter Zusatzwerkstoff (12) ist.

11. Schweißverfahren nach Anspruch 10, **dadurch gekennzeichnet, dass** der Zusatzwerkstoff (12) ein Band oder ein Draht ist, wobei der Zusatzwerkstoff (12) insbesondere stoffschlüssig an wenigstens einer Blechkante (14) gehalten ist.

12. Schweißverfahren nach einem der voranstehenden Ansprüche, **dadurch gekennzeichnet, dass**
- eine Spaltweite (w) des Schweißspalts (10) zwischen einschließlich 0,4 mm bis einschließlich 15 mm beträgt und/oder
- eine zu verschweißende Blechdicke (t) größer oder gleich 2 mm ist, insbesondere größer gleich 8 mm, insbesondere größer oder gleich 10 mm ist.

13. Schweißverfahren nach einem der voranstehenden Ansprüche, **dadurch gekennzeichnet, dass** die gegenüberliegenden Blechkanten (14) im Stumpfstoß verschweißt werden, insbesondere mit einer I-Naht ohne Nahtvorbereitung.

14. Schweißverfahren nach einem der voranstehenden Ansprüche, **dadurch gekennzeichnet, dass**
- wenigstens ein weiterer Schweißkopf (36) vorgesehen ist, und/oder
- ein Schweißzusatzwerkstoff zum Füllen des Schweißspalts (10) vorgesehen ist
und/oder
- dass das Schweißverfahren zumindest teilweise automatisiert ist, insbesondere voll automatisiert ist.

15. Schweißvorrichtung, mit
- wenigstens einer Vorrichtung (4) zum Plasmaschweißen, mit wenigstens einem Schweißkopf (4), der dazu vorgesehen ist, in einer Schweißrichtung (8) entlang eines Schweißspalts (10) geführt zu werden; und
- wenigstens einem Distanzelement (12), das dazu vorgesehen ist, zwischen gegenüberliegenden Blechkanten (14) in dem Schweißspalt (10) angeordnet zu werden.
